# EUROPÄISCHE PATENTANMELDUNG

(11) **EP 4 339 136 A1**
(43) Veröffentlichungstag der Anmeldung: **20.03.2024**
(21) Anmeldenummer: 23194508.0
(22) Anmeldetag: 31.08.2023
(51) Int. Cl.: B65G 35/00, B65G 47/52

(54) **VEREINZELUNGSVORRICHTUNG SOWIE VERFAHREN ZUM VEREINZELN VON VORFORMLINGEN**

(30) Priorität: 12.09.2022 DE 102022123108
(71) Anmelder: KHS GmbH, 44143 Dortmund (DE)
(72) Erfinder: Holler, Dieter, 23843 Bad Oldesloe (DE); Heller, Alexander, 22941 Bargteheide (DE)

(57) **Zusammenfassung**

Gegenstand der Erfindung ist eine Vereinzelungsvorrichtung zum Vereinzeln von Vorformlingen (1) mit einer entlang einer Förderrichtung (F) angeordneten Fördergasse (7), wobei zur Bildung zumindest eines Förderabschnittes (8, 9) zwei gegenläufig rotierbar eingerichtete Förderrollen (6, 10) mit jeweils parallel zur Förderrichtung (F) angeordneten Drehachsen (D) zueinander beabstandet sind. Erfindungsgemäß sind unterhalb der Fördergasse (7) eine oder mehrere Fluiddüsen (13a, 13b, 13c) zur Beaufschlagung der Vorformlinge (1)mit einem Fluid angeordnet.

## Beschreibung

Die vorliegende Erfindung betrifft eine Vereinzelungsvorrichtung zum Vereinzeln von Vorformlingen mit einer entlang einer Förderrichtung angeordneten Fördergasse, wobei zur Bildung zumindest eines Förderabschnittes der Fördergasse zwei gegenläufig rotierbar eingerichtete Fördererrollen mit jeweils parallel zur Förderrichtung angeordneten Drehachsen zueinander beabstandet sind.

Derartige Vereinzelungsvorrichtungen sind grundsätzlich aus dem Stand der Technik bekannt und werden üblicherweise auch als Rollensortierer bezeichnet, da durch die Drehbewegung der Förderrollen einerseits eine Vereinzelung und andererseits eine Sortierung der Vorformlinge im Zuge der Bewegung entlang des Förderabschnittes erfolgen kann. Bei derartigen Rollensortierern wird die Fördergasse im Wesentlichen über die von den Förderrollen gebildeten Förderabschnitte gebildet.

Die Erfindung bezieht sich insbesondere auf Vereinzelungsvorrichtungen aus dem Bereich der Getränkeindustrie, wobei es sich bei den Vorformlingen um sogenannte Preforms handelt, welche in der Blasmaschine zu Getränkebehältern ausgebildet werden. Entsprechend bestehen die Vorformlinge aus einem thermoplastischen Material, insbesondere aus Polyethylenterephthalat (PET), sodass sie in geeigneter Art und Weise erwärmt, aufgeweicht und sodann durch Beaufschlagung mit einem Innendruck zu einem Behälter expandiert werden können.

Um einen unterbrechungsfreien Herstellungsprozess in der Blasmaschine zu gewährleisten, muss diese kontinuierlich mit Vorformlingen beschickt werden. Diese liegen üblicherweise vorgefertigt vor und müssen ausgehend von einem Sammelbehälter vereinzelt und ausgerichtet der Blasmaschine zugeführt werden.

Die Vereinzelungsvorrichtung ist hierbei Teil einer Zuführanlage, welche neben der Vereinzelungsvorrichtung üblicherweise auch über einen sogenannten Steigförderer verfügt, über die die Preforms aus dem Sammelbehälter entnommen und entlang einer vertikalen Richtung nach oben transportiert werden. Die Vorformlinge fallen dann von oben in die Fördergasse hinein, wobei die Fördergasse hinsichtlich ihrer Breite insbesondere durch den Abstand der beiden Förderrollen zueinander definiert wird.

Hierbei ist zu beachten, dass die Vorformlinge in einem vereinzelten und sortierten Zustand mit ihrem sogenannten Neckring zwischen den Fördererrollen hängen bleiben und durch die gegenläufige Rotation der Fördererrollen kontinuierlich nach oben geworfen werden. Entsprechend weisen die Förderrollen an der Fördergasse eine nach oben zeigende Drehrichtung auf. Durch diese Wurfbewegung richten sich die Vorformlinge derart aus, dass deren Öffnung nach oben zeigt, während der später in der Blasmaschine auszuformende Bereich der Vorformlinge zwischen den Förderrollen in der Fördergasse angeordnet ist. Durch eine Schrägstellung der Förderrollen kann darüber hinaus der Transport in Förderrichtung verbessert werden.

Entsprechende Ausgestaltungen sind beispielsweise aus der EP 2 892 661 oder aus der WO 2011/069268 A1 bekannt. In diesen Druckschriften wird sich darüber hinaus mit der Problematik von schräggestellten Vorformlingen befasst, welche sich nicht in geeigneter Art und Weise in die Fördergasse einreihen lassen. Dies ist insbesondere dann problematisch, wenn eine hohe Anzahl von Vorformlingen in die Vereinzelungsvorrichtung eingebracht wird und diese somit dicht aneinander anliegen. Durch die Rotation der Fördererrollen können dann gegebenenfalls nicht alle Vorformlinge in die Fördergasse eingereiht werden.

Die EP 2 892 661 A1 schlägt in diesem Zusammenhang vor, die schräg gestellten und damit fehlausgerichteten Vorformlinge durch Ausübung eines mechanischen Stoßes auszurichten und in die Fördergasse einzureihen. Hierzu ist ein Rotationkörper mit einem sternförmigen Querschnitt vorgesehen, wobei die vorstehenden Abschnitte durch Rotation an die Formvorlinge anschlagen.

Darüber hinaus sind aus dem Stand der Technik auch Vorrichtungen bekannt, bei denen über einen Luftstoß und/oder durch mechanische Auswerfer die Vorformlinge aus der Fördergasse ausgebracht werden können.

Die vorstehend beschriebenen Vereinzelungsvorrichtungen haben sich grundsätzlich bewährt. Allerdings hat sich gezeigt, dass die bislang bekannten Lösungen zum Ausrichten der Preforms verbesserungsbedürftig sind.

Vor diesem Hintergrund liegt der Erfindung die Aufgabe zugrunde, eine Vereinzelungsvorrichtung anzugeben, welche sich gegenüber den bislang bekannten Lösungen durch eine verbesserte Förderung und Vereinzelung der Vorformlinge auszeichnet.

Lösung dieser Aufgabe und Gegenstand der Erfindung ist eine Vereinzelungsvorrichtung gemäß Patentanspruch 1. Demnach sind unterhalb der Fördergasse eine oder mehrere Fluiddüsen angeordnet und eingerichtet, die Vorformlinge mit einem Fluidstrom zu beaufschlagen, welcher zumindest teilweise in Förderrichtung ausgerichtet ist.

Die in der Fördergasse angeordneten Vorformlinge erstrecken sich im Wesentlichen entlang einer vertikalen Richtung innerhalb der Fördergasse, wobei mit einer Anordnung unterhalb der Fördergasse gemeint ist, dass die Fluiddüsen in einem Bereich angeordnet sind, welcher nicht für den Transport der Vorformlinge erforderlich ist bzw. welcher bestimmungsgemäß unterhalb der maximalen vertikalen Erstreckung der Vorformlinge liegt.

Erfindungsgemäß werden die Vorformlinge an zumindest einer Stelle in der Fördergasse mit einem Fluid beaufschlagt, wobei es sich bei diesem Fluid insbesondere um Luft handelt, wobei die Luft in Form eines kontinuierlichen Luftstroms vorliegt. Das Fluid wirkt hierbei von unten auf die Vorformlinge in der Fördergasse ein, sodass dieser zusätzlich zu der Bewegung der Förderrollen nach oben gedrückt werden und sich dann vergleichsweise einfach in ausgerichteter Art und Weise in die Fördergasse einreihen lassen.

Dieser Vorgang ist besonders vorteilhaft, wenn die Vorformlinge in einer großen Stückzahl in einem vergleichsweise kleinen Bereich vorliegen. Hierbei ist zu beachten, dass der Steigförderer keine kontinuierlich gleichbleibende Menge an Vorformlingen in den Rollensortierer einbringt. Vielmehr kann sich die Menge der Vorformlinge von Zeitabschnitt zu Zeitabschnitt unterscheiden. Insofern liegen mal mehr und mal weniger Vorformlinge in dem Rollensortierer vor, wobei durch das gezielte Einbringen eines Fluides Ansammlungen von Vorformlingen aufgelockert und einsortiert werden können.

Besonders wirksam ist in diesem Zusammenhang eine Ausgestaltung, bei der die zumindest eine Fluiddüse eine schräg zur Förderrichtung ausgerichteten Düsenöffnung aufweist. Mit einer schräg zur Förderrichtung gemeinten Ausrichtung ist in diesem Zusammenhang eine Ausgestaltung gemeint, bei der die Fluiddüse eine Fluidströmung erzeugt, welche zumindest eine Geschwindigkeitskomponente in Förderrichtung sowie eine Geschwindigkeitskomponente senkrecht dazu bzw. in vertikale Richtung nach oben aufweist. Insofern bewirkt die Fluidströmung nicht nur ein Anheben der Vorformlinge innerhalb der Fördergasse sondern gleichzeitig auch eine Beschleunigung der Vorformlinge in Förderrichtung. Durch diese Beschleunigung lassen sich insbesondere Ansammlungen von Vorformlingen besonders leicht auflösen, da diese entlang der Fördergasse auseinandergezogen werden. Durch die Geschwindigkeitskomponente vertikal zur Förderrichtung können dann die aufgestauten Vorformlinge zunächst aus der Fördergasse herausgeschoben werden und fallen dann in den entstandenen Raum, der sich im Zuge des Auseinanderziehens der Vorformlinge herausgebildet hat.

Besonders bevorzugt ist in diesem Zusammenhang eine Ausgestaltung, bei der die Düsenöffnung der zumindest ein Fluiddüse unter einem Winkel zwischen 20% und 70 %, bevorzugt zwischen 30% und 60%, zur Förderrichtung ausgerichtet ist.

Wie bereits eingangs erläutert weißt die Vereinzelungsvorrichtung zumindest einen Förderabschnitt auf, wobei dieser Förderabschnitt vor allem durch die zwei gegenläufig rotierbar eingerichteten Förderrollen definiert ist. Gemäß einer bevorzugten Ausgestaltung der Erfindung ist dann zumindest eine Fluiddüse in dem Förderabschnitt angeordnet.

Die Länge des Förderabschnittes ist grundsätzlich nicht begrenzt. Sie liegt aber bevorzugt in einem Bereich zwischen 1,5 m und 3,5 m, besonders bevorzugt zwischen 2 m und 3 m. Sofern eine längere Fördergasse für den Einsatz der Vereinzelungsvorrichtung erforderlich ist, ist es üblich, nicht die Förderrollen zu verlängern, sondern vielmehr mehrere Förderrollen in Förderrichtung hintereinander anzuordnen. Gemäß einer solchen Ausgestaltung ist dann die Fördergasse zumindest durch zwei oder auch mehr Förderabschnitte gebildet, wobei die Förderabschnitte jeweils zwei gegenläufig rotierbar eingerichteten Förderrollen aufweisen. Die jeweils zwei gegenläufig rotierbar eingerichteten Förderrollen bilden ein Förderrollenpaar, wobei jeder Förderabschnitt über ein separates Fördererrollenpaar verfügt. Durch eine solche Ausgestaltung ist es möglich, die Gesamtlänge der Fördergasse zu erhöhen, ohne die mechanische Stabilität der Förderrollen zu beeinflussen.

Ausgehend von einer solchen Ausgestaltung ist in zumindest einer der Förderabschnitte eine Fluiddüse angeordnet. Besonders bevorzugt ist aber jeweils in den Förderabschnitten eine Fluiddüse angeordnet. In diesem Zusammenhang ist anzumerken, dass üblicherweise sämtliche Fluiddüsen schräg zur Förderrichtung angeordnet sind bzw. dass bevorzugt die Fluiddüsen identisch ausgerichtet sind.

Die erfindungsgemäße Vereinzelungsvorrichtung ist bevorzugt ausschließlich als Rollensortierer ausgebildet. Gemäß einer solchen Ausgestaltung wird die Länge der Fördergasse gemäß dem Stand der Technik im Wesentlichen über die hintereinander angeordneten Förderabschnitte gebildet. Dies schließt selbstverständlich nicht aus, dass auch einzelne Bereiche vorgesehen sein können, in welchen die Fördergasse ohne gegenläufig rotierbare Förderrollen gebildet ist, allerdings bilden die Förderabschnitte bevorzugt zumindest 80 %, bevorzugt zumindest 90% der gesamten Länge der Fördergasse. Darüber hinaus sind auch Ausgestaltungen möglich, bei denen die Fördergasse zu 95% durch die Förderabschnitte gebildet wird. Die Fördergasse kann darüber hinaus eine unterhalb der Förderrollen angeordnete Bodenwandung aufweisen, wobei die Fluiddüsen dann jeweils in Öffnungen der Bodenwandung angeordnet sind bzw. sich durch diese hindurch erstrecken.

Besonders bevorzugt ist eine Ausgestaltung, bei der die Förderabschnitte durch einen Zwischenabschnitt voneinander getrennt sind, wobei zumindest eine Fluiddüse so angeordnet ist, dass sie in dem Zwischenabschnitt auf die Vorformlinge einwirkt. Ein solcher Zwischenabschnitt kann beispielsweise dafür vorgesehen sein, die beiden hintereinander angeordneten Förderrollenpaare zu lagern, wobei innerhalb des Zwischenabschnittes keine gegenläufig rotierenden Förderrollen vorgesehen sind, welche auf die Vorformlinge einwirken. Insofern entfällt in dem Zwischenabschnitt ein durch die Förderrollen bewirkter Vortrieb. Dieser Vortrieb kann dann durch die Fluiddüse überbrückt werden, sodass innerhalb des Zwischenabschnittes keine nennenswerte Reduzierung der Fördergeschwindigkeit der Vorformlinge erfolgt.

Selbstverständlich ist es auch denkbar, mehr als zwei Förderabschnitte vorzusehen, wobei bevorzugt jeweils eine Fluiddüse in den zwischen den Förderabschnitten angeordneten Zwischenabschnitten angeordnet ist. Gemäß einer bevorzugten Ausgestaltung der Erfindung ist oberhalb der Förderrollen ein Förderraum vorgesehen, welche durch entlang der Förderrichtung verlaufene Seitenwände und eine Deckenwand begrenzt ist. Entsprechend ist ein Eingriff in die Fördergasse nicht ohne weiteres möglich. Auch können die Vorformlinge nicht ohne weiteres aus dem Förderraum herausgeblasen werden, sodass stets eine Einreihung der Vorformlinge in die Fördergasse erwünscht ist.

Bereits zuvor wurde erläutert, dass der Steigförderer in relativ diskontinuierlicher Art und Weise unterschiedlich viele Vorformlinge pro Zeitabschnitt in den Rollensortierer einbringt. Gerade in einem Anfangsbereich der Fördergasse können daher die Vorformlinge in einfacher Art und Weise fehlausgerichtet vorliegen, wobei erst im Laufe der Förderung entlang der Fördergasse die Vorformlinge in die Fördergasse einsortiert werden. Entsprechend sind gerade in diesem Anfangsbereich Maßnahmen erforderlich, um eine Fehlausrichtung und damit ein Verhaken der Vorformlinge untereinander zu vermeiden. Unter dem Anfangsbereich ist in diesem Zusammenhang der Bereich der Fördergasse gemeint, welcher bestimmungsgemäß in einem Zulaufbereich liegt und durch die Positionierung der Förderrollen bestimmt wird. Entsprechend beginnt der Anfangsbereich mit dem Vorliegen der Förderrollen, wobei üblicherweise unmittelbar zu Beginn dieses Anfangsbereich die Zuführung der Vorformlinge erfolgt.

Gemäß einer solchen Ausgestaltung ist dann zumindest eine Fluiddüse in dem Anfangsbereich der Fördergasse angeordnet, wobei sich der Anfangsbereich über höchstens 40 %, besonders bevorzugt höchstens 25 %, der Gesamtlänge der Fördergasse erstrecken kann. Die Gesamtlänge der Fördergasse richtet sich wiederum nach der Anzahl der Förderabschnitte, wobei die Gesamtlänge der Fördergasse pro vorhandenem Förderabschnitt bevorzugt zwischen 1,5 m und 3 m liegt.

Gemäß einer bevorzugten Ausgestaltung der Erfindung ist eine Zuführeinrichtung oberhalb der Fördergasse angeordnet, welche in Förderrichtung innerhalb des Anfangsabschnittes endet. Über diese Zuführeinrichtungen werden die Vorformlinge dem Rollensortierer bzw. der Vereinzelungsvorrichtung zugeführt, wobei diese von oben herab in die Fördergasse zwischen den Förderrollen fallen. Üblicherweise ändert der Anfangsabschnitt unmittelbar an dem Beginn der Fördergasse, wobei das Ende der Zuführeinrichtung und der Anfangspunkt der Fördergasse max. 0,5 m voneinander beabstandet sind. Bei der Zuführeinrichtung handelt es sich insbesondere um ein umlaufendes Transportband, welches die Vorformlinge von dem Steigförderer ausgehend zu der Vereinzelungsvorrichtung transportiert.

Da das Einbringen der Vorformlinge von oben herab in die Fördergasse erfolgt, ist darüber hinaus in diesem Bereich keine Deckenwandung vorgesehen. Alternativ kann auch eine Durchbrechung in der Deckenwand vorgesehen sein.

Eine bevorzugte Weiterbildung der Erfindung sieht vor, dass die Seitenwände im Anfangsbereich der Fördergasse zumindest abschnittsweise abgerundet ausgebildet sind. Über diese abgerundete Form können die Vorformlinge in einfacher Art und Weise in die Fördergasse rutschen, sodass bereits durch die Formgebung der Seitenwände eine gewisse Vereinzelung und Sortierung der Vorformlinge erfolgt. Besonders bevorzugt ist in diesem Zusammenhang eine Ausgestaltung, bei der die Seitenwände nicht vollständig im Anfangsbereich abgerundet sind sondern vielmehr die abgerundete Form an der ersten Fluiddüse in Förderrichtung endet.

Eine weitere Ausgestaltung sieht vor, dass die Fluiddüsen jeweils an ein erstes und zumindest an ein zweites Ventil schaltbar angeschlossen sind, wobei die Ventile für unterschiedliche Fluidstromdrücke eingerichtet sind. Entsprechend können die Fluiddüsen durch zumindest zwei Ventile betrieben werden, wobei diese Ventile die Fluiddüsen mit einem unterschiedlichen Druck beaufschlagen. So kann es beispielsweise vorgesehen sein, dass in einem ersten Zeitabschnitt nach der Inbetriebnahme der Vereinzelungsvorrichtung zunächst die Fluiddüsen mit einem ersten Ventil und in einem daran anschließenden Zeitabschnitt mit dem zweiten Ventil betrieben werden, wobei das erste Ventil für einen größeren Druck eingerichtet ist als das zweite Ventil. Entsprechend bildet sich ein größerer Volumenstrom mit einem größeren Staudruck aus, sodass die Vorformlinge besonders wirkungsvoll beschleunigt und aus der Fördergasse herausbewegt werden können. Selbstverständlich liegt es auch im Rahmen der Erfindung, eine umgekehrte Ausgestaltung vorzunehmen. Darüber hinaus ist es auch alternativ möglich, die Fluiddüsen an einer einstellbaren Druckquelle anzuschließen, wobei dann über eine Steuereinheit ein unterschiedlicher Fluidstromdruck von der Druckquelle in den unterschiedlichen Zeitabschnitten erzeugt werden kann.

Gemäß einer bevorzugten Ausgestaltung der Erfindung sind die Fluiddüsen mit einer Druckluftversorgung verbunden, sodass entsprechend Druckluft als Fluid zum Einsatz kommt.

Darüber hinaus sieht eine bevorzugte Ausgestaltung vor, dass die Fördergasse bezüglich einer vertikalen Richtung schräg gestellt ist. Mit einer vertikalen Richtung ist in diesem Zusammenhang eine Lotrechte gemeint, sodass bei einer Schrägstellung die Vorformlinge allein durch deren Gewichtskraft transportiert werden. Üblicherweise sind die Förderrollen und die Fördergasse an einem Gestell montiert, wobei dann die Förderrollen und entsprechend auch die Fördergasse schräg zu dem Gestell angeordnet sind. Bezüglich einer senkrecht zur Vertikalrichtung verlaufenden Ebene weisen die Förderrollen und damit auch die Fördergasse einen Winkel zwischen 8° und 10° auf.

Gegenstand der Erfindung ist ferner ein Verfahren zum Vereinzeln von Vorformlingen in einer erfindungsgemäßen Vereinzelungsvorrichtung gemäß Patentanspruch 14. Drüber hinaus kann die Vereinzelungsvorrichtung auch eine Steuereinheit aufweisen, welche zur Durchführung des nachfolgend beschriebenen Verfahrens eingerichtet ist.

Erfindungsgemäß werden die Vorformlinge in die Fördergasse eingebracht und durch gegenläufige Rotation von zumindest zwei Förderrollen entlang der Förderrichtung transportiert, wobei die Vorformling im Zuge des Transports mindestens abschnittsweise entlang der Fördergasse mit einem Fluidstrom beaufschlagt werden. Mit einer Beaufschlagung ist in diesem Zusammenhang gemeint, dass der Fluidstrom auf die Vorformlinge einwirkt und diese insbesondere beschleunigt und auflockert. Bereits zuvor wurde erläutert, dass im Zuge der Auflockerung die Vorformlinge aus der Fördergasse heraus in den Förderraum bewegt werden. Zugleich werden die Vorformlinge auch in Förderrichtung beschleunigt, sodass die aus der Fördergasse herausbewegten Vorformlinge in einfacher Art und Weise in den entstandenen Raum hineinfallen können. Hierdurch kann die Vereinzelung deutlich verbessert werden.

Eine Weiterbildung des Verfahrens sieht ferner vor, dass der Fluidstrom schräg zur Fördergasse auf die Vorformlinge einwirkt. Darüber hinaus ist auch bevorzugt vorgesehen, dass der Fluidstrom in einem bezüglich der Vorformling Höhe mittigen Bereich auf die Vorformlinge einwirkt.

Bevorzugt handelt es sich bei dem Fluidstrom um einen Luftstrom, wobei selbstverständlich auch andere Medien denkbar sind. Gerade bei Druckluft handelt es sich jedoch um ein besonders einfach bereitzustellendes Medium, welches darüber hinaus auch nicht in umständliche Art und Weise aus dem Rollensortierer abgeführt werden muss, sondern einfach in die Umgebung eingebracht werden kann.

Eine bevorzugte Weiterbildung sieht ferner vor, dass der Fluidstrom auf Basis eines Betriebsrezeptes eingestellt wird. Bei der Einstellung kann es sich beispielsweise um den Winkel der Schrägstellung als auch um den Betrag des Fluidstroms handeln, sodass sowohl die Menge als auch der Auftreffwinkel in Abhängigkeit des Betriebsrezeptes gewählt werden können. Bei dem Betriebsrezept handelt es sich insbesondere um ein Parametersatz, welcher insbesondere die wesentlichen Werte für den Fluidstrom enthält, insbesondere dessen zeitliche Werte, den Fluidstromdruck und/oder den Volumenstrom. Ein Parametersatz ist auf eine bestimmte Form und Größe eines Vorformlings angepasst.

Darüber hinaus ist bevorzugt vorgesehen, dass der Fluidraum zwischen zumindest zwei Betriebszeiträumen verstellt. Hier kann beispielsweise zwischen einem ersten Zeitraum nach einer Inbetriebnahme und einen daran anschließenden zweiten Zeitraum unterschieden werden, wobei beispielsweise in dem ersten Zeitraum ein größerer Fluidstrom hinsichtlich der Menge vorgesehen ist. Auch ein unterschiedlicher Winkel kann in beiden Betriebszeiträumen vorgesehen sein.

Bevorzugt wird die Vereinzelungsvorrichtung in einer Startphase mit einem ersten Fluidstromdruck und in einer der Startphase nachgelagerten Betriebsphase mit einem zweiten, vom ersten Fluidstromdruck verschiedenen, Fluidstromdruck betrieben, wobei mit Vorteil der Fluidstromdruck in der Startphase ein höherer Druck ist als in der Betriebsphase.

Im Folgenden wird die Erfindung anhand eines Ausführungseispieles erläutert. Es zeigen:
- Fig. 1: eine erfindungsgemäße Vereinzelungsvorrichtung mit angrenzenden Anlagenkomponenten
- Fig. 2: eine schematische Darstellung der erfindungsgemäßen Vereinzelungsvorrichtung in einer seitlichen Schnittdarstellung
- Fig. 3: die Vereinzelungsvorrichtung gemäß Fig. 2 in einer Draufsicht

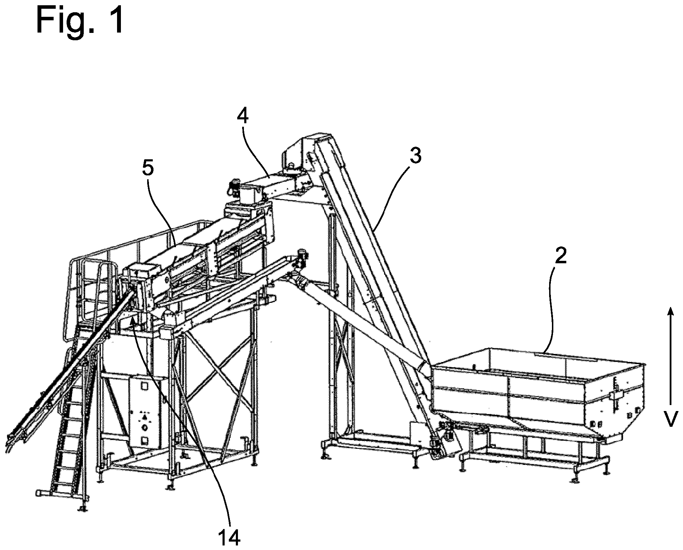

Die Fig. 1 zeigt eine Vorrichtung zum Transport und zur Vereinzelung von Vorformlingen 1, welche beispielsweise in einem vereinzelten Zustand einer Blasmaschine für die Herstellung von Getränkeflaschen zugeführt werden. Die Formvorlinge 1 sind üblicherweise aus einem thermoplastischen Material, insbesondere aus Polyethylenterephthalat (PET), gebildet und liegen zunächst in einem Sammelbehälter 2 vor. Ausgehend von diesem Sammelbehälter 2 werden die Vorformlinge 1 über ein Steigförderer 3 zu einer Zuführeinrichtung 4 transportiert, welche endseitig oberhalb einer als Rollensortierer 5 ausgebildeten Vereinzelungsvorrichtung angeordnet ist und die Vorformlinge 1 von oben herab in den Rollensortierer 5 einwirft. In dem Rollensortierer 5 erfolgt dann das Vereinzeln und Einsortieren der Vorformlinge 1. Darüber hinaus werden die Vorformlinge 1 entlang einer Förderrichtung F transportiert und anschließend einer Zuführrutsche 14 zugeführt. Innerhalb dieser Zuführrutsche 14 rutschen die einsortierten Vorformlinge 1 dann in eine nachgeschaltete Anlagenkomponente zum Beispiel in einen Transportstern.

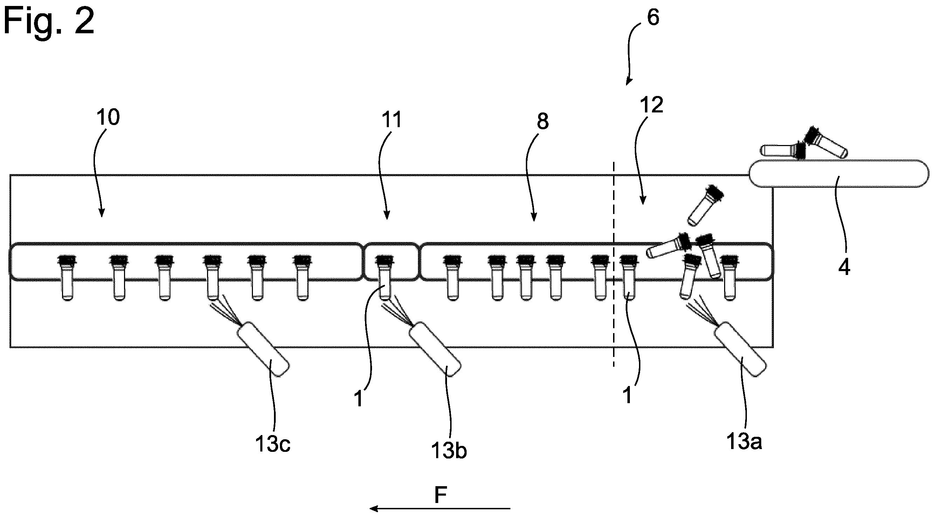

Anhand der Fig. 1 ist ferner ersichtlich, dass die Vereinzelungsvorrichtung in Form des Rollensortierers 5 bezüglich einer Vertikalrichtung V schräg gestellt ist und demnach auch die Vorformlinge 1 entlang einer schräggestellten Förderrichtung F transportiert werden. Diese Schrägstellung ist den Abbildungen in der Fig. 1 und der Fig. 2 nicht entnehmbar, da es sich lediglich um eine schematische Darstellung handelt. Durch die Schrägstellung wird insbesondere eine besonders gute Förderung der Vorformlinge 1 bewirkt.

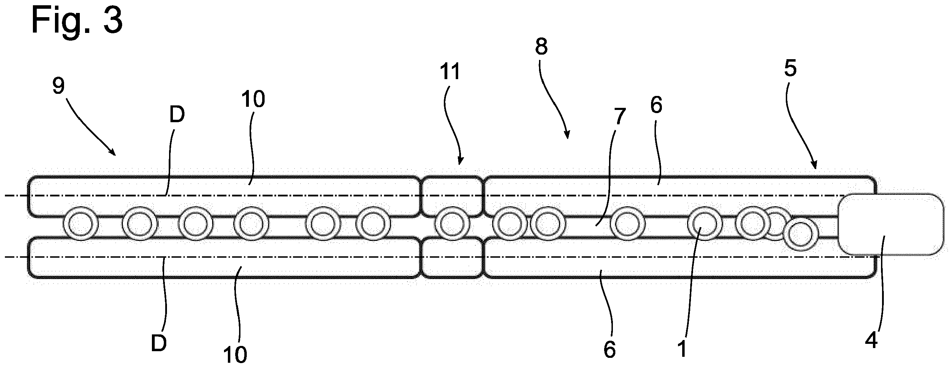

Die Fig. 2 und 3 zeigen die erfindungsgemäße Vereinzelungsvorrichtung in unterschiedlichen Ansichten. Hierbei wird deutlich, dass die Vereinzelungsvorrichtung ein aus den ersten Förderrollen 6 gebildetes Förderrollenpaar aufweist, wobei die Drehachsen D parallel zur Förderrichtung F angeordnet und die ersten Förderrollen 6 zueinander beabstandet sind, sodass sich zwischen den ersten Förderrollen 6 eine Fördergasse 7 ausbildet. Hierbei bilden die Förderrollen 6 lediglich in einem ersten Förderabschnitt 8 die Fördergasse 7, wobei ein zweiter Förderabschnitt 9 mit einem weiteren Förderrollenpaar in Form der zweiten Förderrollen 10 an den ersten Förderergassenabschnitt 8 anschließt. Zwischen den beiden Förderabschnitten 8, 9 ist darüber hinaus ein Zwischenabschnitt 11 vorgesehen, wobei in diesem Zwischenabschnitt 11 keine Förderrollen 6, 10 angeordnet sind und die Vorformlinge 1 daher durch die Förderrollen 6, 10 nicht angetrieben werden. In dem Zwischenabschnitt 11 erfolgt üblicherweise eine endseitige Lagerung der Förderrollen 6, 10.

Die Förderrollen 6, 10 der beiden Fördererrollenpaare sind gegenläufig rotierbar zueinander eingerichtet, wobei die Vorformlinge 1 innerhalb der Fördergasse 7 durch die Bewegung der Förderrollen 6, 10 eine Aufwärtsbewegung bzw. eine Bewegung in Vertikalrichtung V erfahren. Hierdurch lassen sich die Vorformlinge 1 besonders einfach innerhalb der Fördergasse 7 einsortieren, wobei dahin die Öffnung der Vorformlinge 1 nach oben zeigt.

Insbesondere in einem in der Fig. 2 dargestellten Anfangsbereich 12 können sich jedoch je nach Beladung die zugeführten Vorformlinge 1 aufstauen und sich gegenseitig aus der Fördergasse 7 schieben. Entsprechend reicht die Drehung der Förderrollen 6, 10 nicht aus, um die Vorformlinge 1 in der Fördergasse 7 einzusortieren.

Vor diesem Hintergrund sind gemäß der Darstellung in der Fig. 2 Fluiddüsen 13a, 13b, 13c vorgesehen, wobei die erste Fluiddüse 13a in dem ersten Förderabschnitt 8 und die dritte Fluiddüse 13c in dem zweiten Förderabschnitt 10 angeordnet ist. Die zweite Fluiddüse 13b wirkt hingegen in dem Zwischenabschnitt 11 auf die Vorformlinge 1 ein, sodass der nicht angetriebene Zwischenabschnitt 11 für die Vorformlinge 1 in leichter Art und Weise überbrückt werden kann.

Besonders entscheidend ist in diesem Zusammenhang die erste Fluiddüse 13a, welche in dem Anfangsbereich 12 der Fördergasse 7 angeordnet ist. Der Anfangsbereich 12 kann sich hierbei über höchstens 20 % der Gesamtlänge der Fördergasse 7 erstrecken, sodass die unmittelbar in Rollensortierer 5 eingebrachten Vorformlinge 1 möglichst zeitnah innerhalb der Fördergasse 7 aufgelockert und einsortiert werden.

### Bezugszeichenliste

- 1: Vorformling
- 2: Sammelbehälter
- 3: Steigförderer
- 4: Zuführeinrichtung
- 5: Rollensortierer
- 6: erste Förderrollen
- 7: Fördergasse
- 8: erster Förderabschnitt
- 9: zweiter Förderabschnitt
- 10: zweite Förderrollen
- 11: Zwischenabschnitt
- 12: Anfangsbereich
- 13a: erste Fluiddüse
- 13b: zweite Fluiddüse
- 13c: dritte Fluiddüse
- 14: Zuführrutsche
- D: Drehachse
- F: Förderrichtung
- V: Vertikalrichtung

## Patentansprüche

1. Vereinzelungsvorrichtung zum Vereinzeln von Vorformlingen (1) mit einer entlang einer Förderrichtung (F) angeordneten Fördergasse (7), wobei zur Bildung zumindest eines Förderabschnittes (8, 9) zwei gegenläufig rotierbar eingerichtete Förderrollen (6, 10) mit jeweils parallel zur Förderrichtung (F) angeordneten Drehachsen (D) zueinander beabstandet sind,
**dadurch gekennzeichnet, dass**
unterhalb der Fördergasse (7) eine oder mehrere Fluiddüsen (13a, 13b, 13c) angeordnet sind, welche dazu eingerichtet sind, die Vorformlinge (1) mit einem Fluidstrom zu beaufschlagen, welcher zumindest teilweise in Förderrichtung (F) ausgerichtet ist.

2. Vereinzelungsvorrichtung nach Anspruch 1, **dadurch gekennzeichnet, dass** die zumindest eine Fluiddüse (13a, 13b, 13c) eine schräg zur Förderrichtung (F) ausgerichtete Düsenöffnung aufweist.

3. Vereinzelungsvorrichtung nach Anspruch 2, **dadurch gekennzeichnet, dass** die Düsenöffnung der zumindest einen Fluiddüse (13a, 13b, 13c) unter einem Winkel zwischen 20 und 70°, bevorzugt zwischen 30 und 60°, zur Förderrichtung (F) ausgerichtet ist.

4. Vereinzelungsvorrichtung nach einem der vorangegangenen Ansprüche, **dadurch gekennzeichnet, dass** die Fördergasse (7) zumindest durch zwei Förderabschnitte (8, 9) gebildet ist, wobei die Förderabschnitte (8, 9) jeweils zwei gegenläufig rotierbar eingerichtete Förderrollen (6, 10) aufweisen.

5. Vereinzelungsvorrichtung nach Anspruch 4, **dadurch gekennzeichnet, dass** in den zumindest zwei Förderabschnitten (8, 9) jeweils zumindest eine Fluiddüse (13a, 13b, 13c) angeordnet ist.

6. Vereinzelungsvorrichtung nach Anspruch 4 oder 5, **dadurch gekennzeichnet, dass** die Förderabschnitte (8, 9) durch einen Zwischenabschnitt (11) voneinander getrennt sind, wobei zumindest eine Fluiddüse (13a, 13b, 13c) so angeordnet ist, dass sie in dem Zwischenabschnitt (11) auf die Vorformlinge (1) einwirkt.

7. Vereinzelungsvorrichtung nach einem der vorangegangenen Ansprüche, **dadurch gekennzeichnet, dass** oberhalb der Förderrollen (6, 10) ein Förderraum vorgesehen ist, welcher durch entlang der Förderrichtung (F) verlaufende Seitenwände und eine Deckenwand begrenzt ist.

8. Vereinzelungsvorrichtung nach einem der vorangegangenen Ansprüche, **dadurch gekennzeichnet, dass** zumindest eine Fluiddüse (13a, 13b, 13c) in einem Anfangsbereich (12) der Fördergasse (7) angeordnet ist, wobei sich der Anfangsbereich (12) über höchstens 40 %, bevorzugt höchstens 25 %, der Gesamtlänge der Fördergasse (7) entspricht.

9. Vereinzelungsvorrichtung nach Anspruch 7, **dadurch gekennzeichnet, dass** eine Zuführeinrichtung (4) oberhalb der Fördergasse (7) angeordnet ist, welche in Förderrichtung (F) innerhalb des Anfangsbereiches (12) endet.

10. Vereinzelungsvorrichtung nach Anspruch 8 oder 9, **dadurch gekennzeichnet, dass** die Seitenwände im Anfangsbereich (12) zumindest abschnittsweise abgerundet ausgebildet sind.

11. Vereinzelungsvorrichtung nach einem der vorangegangenen Ansprüche, dass die Fluiddüsen (13a, 13b, 13c) jeweils an ein erstes und zumindest ein zweites Ventil schaltbar angeschlossen sind, wobei die Ventile für unterschiedliche Fluidstromdrücke eingerichtet sind.

12. Vereinzelungsvorrichtung nach einem der vorangegangenen Ansprüche, **dadurch gekennzeichnet, dass** die Fluiddüsen (13a, 13b, 13c) mit einer Druckluftversorgung verbunden sind.

13. Vereinzelungsvorrichtung nach einem der vorangegangenen Ansprüche, **dadurch gekennzeichnet, dass** die Fördergasse (7) bezüglich einer vertikalen Richtung (V) schräg gestellt ist.

14. Verfahren zum Vereinzeln von Vorformlingen (1) in einer Vereinzelungsvorrichtung nach einem der vorangegangenen Ansprüche, wobei die Vorformlinge (1) in die Fördergasse (7) eingebracht und durch gegenläufige Rotation von zumindest zwei Förderrollen (6, 10) entlang der Förderrichtung (F) transportiert werden und wobei die Vorformlinge (1) im Zuge des Transports zumindest abschnittsweise entlang der Fördergasse (7) mit einem Fluidstrom beaufschlagt werden.

15. Verfahren nach Anspruch 14, wobei der Fluidstrom schräg zur Fördergasse (7) auf die Vorformlinge (1) einwirkt.

16. Verfahren nach Anspruch 14, wobei der Fluidstrom in einem bezüglich der Vorformlinghöhe mittigen Bereich auf die Vorformlinge (1) einwirkt.

17. Verfahren nach Anspruch 14 oder 15, wobei der Fluidstrom ein Luftstrom ist.

18. Verfahren nach einem der Ansprüche 14 bis 17, wobei der Fluidstrom auf Basis eines Betriebsrezeptes eingestellt wird.

19. Verfahren nach einem der Ansprüche 14 bis 18, wobei der Fluidstrom zwischen zumindest zwei Betriebszeiträumen verstellt wird.

20. Verfahren nach einem der Ansprüche 14 bis 18, wobei die Vereinzelungsvorrichtung in einer Startphase mit einem ersten Fluidstromdruck betrieben wird und in einer der Startphase nachgelagerten Betriebsphase mit einem zweiten, vom ersten Fluidstromdruck verschiedenen, Fluidstromdruck betrieben wird, wobei mit Vorteil der Fluidstromdruck in der Startphase ein höherer Druck ist als in der Betriebsphase.
